(19)

Europäisches Patentamt

European Patent Office

Office européen des brevets

(11) **EP 4 582 953 A1**

(12) **EUROPEAN PATENT APPLICATION**

(43) Date of publication:
**09.07.2025 Bulletin 2025/28**

(21) Application number: **24184691.4**

(22) Date of filing: **26.06.2024**

(51) International Patent Classification (IPC):
**G06F 11/07** (2006.01)

(52) Cooperative Patent Classification (CPC):
**G06F 11/0709; G06F 11/0781**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.01.2024 IN 202421001100**

(71) Applicant: **Tata Consultancy Services Limited Maharashtra (IN)**

(72) Inventors:
• **PAWAR, ARJUN AMARSING**
  **411057 Pune, Maharashtra (IN)**

• **PACHCHIGAR, SEJAL**
  **411013 Pune, Maharashtra (IN)**
• **GUJARATHI, KISHOR RAMESH**
  **400079 Mumbai, Maharashtra (IN)**
• **TRIPATHI, VAIBHAV**
  **411057 Pune, Maharashtra (IN)**
• **GAWADE, ARTI ANIL**
  **411028 Pune, Maharashtra (IN)**

(74) Representative: **Goddar, Heinz J.**
**Boehmert & Boehmert**
**Anwaltspartnerschaft mbB**
**Pettenkoferstrasse 22**
**80336 München (DE)**

Remarks:
Amended claims in accordance with Rule 137(2) EPC.

(54) **METHOD AND SYSTEM OF LEARNING-BASED PROBLEM MANAGEMENT FOR INFORMATION TECHNOLOGY (IT) OPERATIONS**

(57)     An architecture of an enterprise can be fully on on-premises with multiple computing systems or on cloud or on Hybrid. Enterprise information technology (IT) departments are continually adopting new technologies and changes leads more complex, and increased probability of service disruption, through malfunctions in software, hardware, networks, natural disasters, simple human error. Embodiments of the present disclosure provide a method and system to detect problem associated with the computing system in an enterprise. A plurality of data associated with each resource in the enterprise is received. The plurality of data is considered to iteratively perform (a) derive a parameter associated with a metric data, and an incident data to obtain an analyzed data, (b) detect a problem associated with each resources by processing the plurality of analyzed data based on a propositional logic, and (c) generate a feedback associated with each problem of the resources in a subsequent iteration.

FIG. 2A

EP 4 582 953 A1

**Description**

CROSS-REFERENCE TO RELATED APPLICATIONS AND PRIORITY

The present application claims priority to Indian application, Application No. 202421001100, filed in India on January 05, 2024.

TECHNICAL FIELD

The disclosure herein generally relates to information technology (IT) management, and, more particularly, to a method and system of learning-based problem management for information technology (IT) operations.

BACKGROUND

An enterprise architecture can be fully on on-premises or on cloud or can be hybrid. An enterprise may contain multiple computing systems such as laptop, desktop, server etc. connected through a network such as LAN, MAN or WAN using network devices such as router, switches etc. Enterprise information technology (IT) departments are continually adopting new technologies that are faster, more scalable, and have a shorter time to market, in order to make their companies more agile and competitive. However, these changes tend to make the IT landscape more complex, and that increases the probability of service disruption, whether through malfunctions in a software, a hardware, or networks, external factors such as natural disasters, or simple human error. To reduce disruptions and keep computing systems operating efficiently, organizations have invested heavily in various technology and application monitoring tools, however disruptions in the IT are continued. With considerable progress made in the field of Artificial Intelligence (AI) and Machine Learning (ML), customers aim to improve the resiliency of their IT operations by analyzing the information available across the different monitoring products to proactively identify the problems that could possibly disrupt the services and impact business SLAs in near future.

In the current scenario, the problems are identified based on incidents that could practically occur in any area of enterprise like hardware, software, network, process, security, performance, etc. Key objective of incident management is to restore the services and if the incident re-occurs then it is important to identify a root cause. The workflow is managed and orchestrated by an information technology system management (ITSM), which may or may not contain all tracking, evidence, and root cause information. The identification of the root cause falls within the purview of problem management. This approach is reactive and waits for an incident to trigger a problems request. A lot of manual analysis is needed to identify problems associated with the computing systems in the enterprises. There is no automated system to track if problem detection rules are followed appropriately and not missed. Even with the highest level of problem management skills, auto detection without a miss is nearly impossible.

There is no global view where a problem manager or a capacity manager can visualize the entire enterprise. It is difficult to generate a problem request by looking at the whole enterprise data at one glance. It is also difficult to keep track of reoccurring incidents or the same incident occurring on multiple computing devices or systems. There is no visibility of the correlation of metrics with the incident (s). Correlation can be defined as one event triggering another event to occur, (e.g., 'High CPU utilization' event may lead to 'application down' event). However, some organizations may use the machine learning model or neural network to detect the problem, but they must rely on specific training and huge label data as problem definition is different for different organization. Iteration of training may be needed as the definition of problem request changes over time. The organizations can categorize problem into different categories such as high impact, low impact, or they may ignore problem of some specific system or application. It is also difficult to suppress/discard the unwanted or low priority or low impact problem requests, as these types of problems may flood the analysis and hinder the decision making. For problem resolution, an expert may create multiple sub-tasks to review information from multiple tools for the request in question to resolve the problem. The sub-task creation may not be accurate and may lead to multiple hops and conflicts.

SUMMARY

Embodiments of the present disclosure present technological improvements as solutions to one or more of the above-mentioned technical problems recognized by the inventors in conventional systems. For example, in one embodiment, a method of detecting one or more problems associated with a computing system in an organization is provided. The processor implemented method includes at least one of: receiving, via one or more hardware processors, a plurality of data associated with one or more resources in an enterprise as an input; and iteratively performing, via the one or more hardware processors, based on the plurality of data associated with the one or more resources, includes: deriving, via the one or more hardware processors, one or more parameters associated with the metric data, and one or more parameters associated with the incident data to obtain a first set of analyzed data, and a second set of analyzed data respectively; consolidating, via the one or more hardware processors, the first set of analyzed data, and the second set of analyzed data to obtain a consolidated single input; detecting, via the one or more hardware processors, one or more problems associated with the one or more resources by processing the consolidated single input based on a propositional logic; and generating, via the one or more hardware processors, one or more feedback associated with the one or more problems in the one or more resources in a subsequent iteration. The plurality of data associated with the one or more resources corresponds to: (i) a metric data, and (ii) an incident data. The one or more resources corresponds to one or more computing systems. The consolidated single input includes one or more attributes of the one or more resources with a summarized analysis result. The propositional logic generate one or more rules which are refined with each iteration. The one or more rules are defined based on one or more parameters associated with the metric data, and the incident data to detect the one or more problems associated with the one or more resources.

In an embodiment, the metric data corresponds to an utilization data of the one or more resources in the enterprise. In an embodiment, the utilization data of the one or more resources includes a central processing unit (CPU), a memory, a filesystem, a storage, and a performance data. In an embodiment, the incident data corresponds to an alert data obtained from the one or more resources. In an embodiment, the alert data includes one or more alerts received upon detecting one or more anomaly in one or more characteristics of the one or more resources. In an embodiment, one or more parameters associated with the metric data corresponds to at least one of: (i) a trend, (ii) a seasonality, (iii) a changepoint, (iv) a headroom, (v) a saturation, (vi) a forecast, (vii) a health status, (viii) a summary. In an embodiment, the summary corresponds to a maximum (MAX), a minimum (MIN), a mean, a median, a standard deviation, a $90^{th}$ percentile. In an embodiment, one or more parameters associated with the incident data corresponds to at least one of: (i) an occurrence of an incident, (ii) one or more patterns associated with the incident, (iii) a correlation of the incident, and (iv) a co-occurrence of the incident. In an embodiment, the propositional logic corresponds to a Boolean logic. In an embodiment, the propositional logic include at least one of: (i) an object, (ii) relations or function, and (iii) logical connectives. In an embodiment, one or more types of the propositional logic corresponds to: (i) an atomic proposition, and (ii) a compound proposition. In an embodiment, one or more types of the logical connectives corresponds to: (i) a negative (ii) a conjunction, and (iii) a disjunction. In an embodiment, one or more types of the feedback associated with the one or more problems corresponds to: (i) a blacklist, (ii) a partial feedback, and (iii) no feedback. In an embodiment, one or more patterns on the feedback provided for each problem associated with the one or more resources is identified. In an embodiment, the one or more patterns on the feedback provided corresponds to at least one of: (i) an accepted feedback, and (ii) a rejected feedback.

In another aspect, there is provided a system to detect one or more problems associated with a computing system in an organization. The system includes a memory storing instructions; one or more communication interfaces; and one or more hardware processors coupled to the memory via the one or more communication interfaces, wherein the one or more hardware processors are configured by the instructions to: receive, a plurality of data associated with one or more resources in an enterprise as an input; and iteratively perform, based on the plurality of data associated with the one or more resources, includes: derive, one or more parameters associated with the metric data, and one or more parameters associated with the incident data to obtain a first set of analyzed data, and a second set of analyzed data respectively; consolidate, the first set of analyzed data, and the second set of analyzed data to obtain a consolidated single input; detect, one or more problems associated with the one or more resources by processing the consolidated single input based on a propositional logic; and generate, one or more feedback associated with the one or more problems in the one or more resources in a subsequent iteration. The plurality of data associated with the one or more resources corresponds to: (i) a metric data, and (ii) an incident data. The one or more resources corresponds to one or more computing systems. The consolidated single input includes one or more attributes of the one or more resources with a summarized analysis result. The propositional logic generate one or more rules which are refined with each iteration. The one or more rules are defined based on one or more parameters associated with the metric data, and the incident data to detect the one or more problems associated with the one or more resources.

In an embodiment, the metric data corresponds to an utilization data of the one or more resources in the enterprise. In an embodiment, the utilization data of the one or more resources includes a central processing unit (CPU), a memory, a filesystem, a storage, and a performance data. In an embodiment, the incident data corresponds to an alert data obtained from the one or more resources. In an embodiment, the alert data includes one or more alerts received upon detecting one or more anomaly in one or more characteristics of the one or more resources. In an embodiment, one or more parameters associated with the metric data corresponds to at least one of: (i) a trend, (ii) a seasonality, (iii) a changepoint, (iv) a headroom, (v) a saturation, (vi) a forecast, (vii) a health status, (viii) a summary. In an embodiment, the summary corresponds to a maximum (MAX), a minimum (MIN), a mean, a median, a standard deviation, a $90^{th}$ percentile. In an embodiment, one or more parameters associated with the incident data corresponds to at least one of: (i) an occurrence of an incident, (ii) one or more patterns associated with the incident, (iii) a correlation of the incident, and (iv) a co-occurrence of the incident. In an embodiment, the propositional logic corresponds to a Boolean logic. In an embodiment, the propositional logic include at least one of: (i) an object, (ii) relations or function, and (iii) logical connectives. In an embodiment, one or more types of the propositional logic corresponds to: (i) an atomic proposition, and (ii) a compound proposition. In an embodiment, one or more types of the logical connectives corresponds to: (i) a negative (ii) a conjunction, and (iii) a disjunction. In an embodiment, one or more types of the feedback associated with the one or more problems correspond to: (i) a blacklist, (ii) a partial feedback, and (iii) no feedback. In an embodiment, one or more patterns on the feedback provided for each problem associated with the one or more resources is identified. In an embodiment, the one or more patterns on the feedback provided corresponds to at least one of: (i) an accepted feedback, and (ii) a rejected feedback.

In yet another aspect, a non-transitory computer readable medium for comprising one or more instructions which when executed by one or more hardware processors causes at least one of: receiving, a plurality of data associated with one or more resources in an enterprise as an input; and iteratively performing, based on the plurality of data associated with the one or more resources, includes: deriving, one or more parameters associated with the metric data, and one or more parameters associated with the incident data to obtain a first set of analyzed data, and a second set of analyzed data respectively; consolidating, the first set of analyzed data, and the second set of analyzed data to obtain a consolidated single input; detecting, one or more problems associated with the one or more resources by processing the consolidated single input based on a propositional logic; and generating, one or more feedback associated with the one or more problems in the one or more resources in a subsequent iteration. The plurality of data associated with the one or more resources corresponds to: (i) a metric data, and (ii) an incident data. The one or more resources corresponds to one or more computing systems. The consolidated single input includes one or more attributes of the one or more resources with a summarized analysis result. The propositional logic generate one or more rules which are refined with each iteration. The one or more rules are defined based on one or more parameters associated with the metric data, and the incident data to detect the one or more problems associated with the one or more resources.

In an embodiment, the metric data corresponds to an utilization data of the one or more resources in the enterprise. In an embodiment, the utilization data of the one or more resources includes a central processing unit (CPU), a memory, a filesystem, a storage, and a performance data. In an embodiment, the incident data corresponds to an alert data obtained from the one or more resources. In an embodiment, the alert data includes one or more alerts received upon detecting one or more anomaly in one or more characteristics of the one or more resources. In an embodiment, one or more parameters associated with the metric data corresponds to at least one of: (i) a trend, (ii) a seasonality, (iii) a changepoint, (iv) a headroom, (v) a saturation, (vi) a forecast, (vii) a health status, (viii) a summary. In an embodiment, the summary corresponds to a maximum (MAX), a minimum (MIN), a mean, a median, a standard deviation, a $90^{th}$ percentile. In an embodiment, one or more parameters associated with the incident data corresponds to at least one of: (i) an occurrence of an incident, (ii) one or more patterns associated with the incident, (iii) a correlation of the incident, and (iv) a co-occurrence of the incident. In an embodiment, the propositional logic corresponds to a Boolean logic. In an embodiment, the propositional logic include at least one of: (i) an object, (ii) relations or function, and (iii) logical connectives. In an embodiment, one or more types of the propositional logic corresponds to: (i) an atomic proposition, and (ii) a compound proposition. In an embodiment, one or more types of the logical connectives corresponds to: (i) a negative (ii) a conjunction, and (iii) a disjunction. In an embodiment, one or more types of the feedback associated with the one or more problems corresponds to: (i) a blacklist, (ii) a partial feedback, and (iii) no feedback. In an embodiment, one or more patterns on the feedback provided for each problem associated with the one or more resources is identified. In an embodiment, the one or more patterns on the feedback provided corresponds to at least one of: (i) an accepted feedback, and (ii) a rejected feedback.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates a system for learning-based problem management in an information technology (IT) operation at an enterprise, according to an embodiment of the present disclosure.

FIG. 2A illustrates an exemplary functional block diagram of the system of FIG. 1, according to some embodiments of the present disclosure.

FIG. 2B illustrates an exemplary functional block diagram of a data preprocessing unit of a problem management system as depicted in FIG. 2A, according to some embodiments of the present disclosure.

FIG. 3 is an exemplary flow diagram illustrating a method of receiving the feedback upon detection of the one or more problems associated with the one or more resources in the enterprise, according to some embodiments of the present disclosure.

FIG. 4A is an exemplary functional block diagram illustrating a consolidated single input associated with a computing system in an organization, according to some embodiments of the present disclosure.

FIG. 4B is an exemplary functional block diagram illustrating one or more computing systems in the organization represented as an inherited class of a data center, according to some embodiments of the present disclosure.

FIG. 4C is an exemplary functional block diagram illustrating one or more data centers represented as a part of a geography, according to some embodiments of the present disclosure.

FIG. 5A and FIG. 5B are exemplary functional block diagrams illustrating the one or more computing systems in a hierarchy to detect the one or more problems based on the preposition logic, according to some embodiments of the present disclosure.

FIG. 6 is an exemplary flow diagram illustrating a method of detecting one or more problems associated with the computing system in the organization, according to an embodiment of the present disclosure.

## DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

There is a need for an effective approach to identify futuristic risks associated with IT systems related to capacity, performance, availability, deployment problems across hardware, software, and network areas of the enterprise IT operations. Embodiments of the present disclosure provide a method and system of learning-based problem management for information technology (IT) operations in an enterprise. The embodiment of the present disclosure learns one or more system behaviors by ingesting a multi-dimensional data that include metrics, configurations, incidents, problems, and change management. The multi-dimensional data is analyzed through machine learning techniques to identify the potential problem and provides observations and recommendations. The embodiment of the present disclosure focuses on analyzing and prediction using historical data analysis and learning-based on user interaction with a problem ticket.

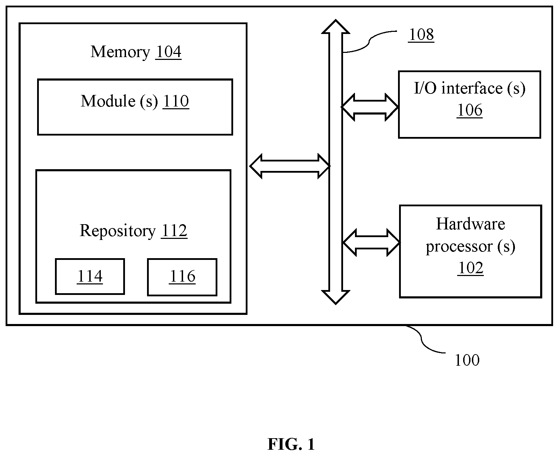

Referring now to the drawings, and more particularly to FIGS. 1 through 6, where similar reference characters denote corresponding features consistently throughout the figures, there are shown preferred embodiments, and these embodiments are described in the context of the following exemplary system and/or method.

FIG. 1 illustrates a system 100 for a learning-based problem management in an information technology (IT) operation at an enterprise, according to an embodiment of the present disclosure. In an embodiment, the system 100 includes one or more processor(s) 102, communication interface device(s) or input/output (I/O) interface(s) 106, and one or more data storage devices or memory 104 operatively coupled to the one or more processors 102. The memory 104 includes a database. The one or more processor(s) processor 102, the memory 104, and the I/O interface(s) 106 may be coupled by a system bus such as a system bus 108 or a similar mechanism. The one or more processor(s) 102 that are hardware processors can be implemented as one or more microprocessors, microcomputers, microcontrollers, digital signal processors, central processing units, state machines, logic circuitries, and/or any devices that manipulate signals based on operational instructions. Among other capabilities, the one or more processor(s) 102 is configured to fetch and execute computer-readable instructions stored in the memory 104. In an embodiment, the system 100 can be implemented in a variety of computing systems, such as laptop computers, notebooks, hand-held devices, workstations, mainframe computers, servers, a network cloud, and the like.

The I/O interface device(s) 106 can include a variety of software and hardware interfaces, for example, a web interface, a graphical user interface, and the like. The I/O interface device(s) 106 may include a variety of software and hardware interfaces, for example, interfaces for peripheral device(s), such as a keyboard, a mouse, an external memory, a camera device, and a printer. Further, the I/O interface device(s) 106 may enable the system 100 to communicate with other devices, such as web servers and external databases. The I/O interface device(s) 106 can facilitate multiple communications within a wide variety of networks and protocol types, including wired networks, for example, local area network (LAN), cable, etc., and wireless networks, such as Wireless LAN (WLAN), cellular, or satellite. In an embodiment, the I/O interface device(s) 106 can include one or more ports for connecting a number of devices to one another or to another server.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 110 and a repository 112 for storing data processed, received, and generated by the plurality of modules 110. The plurality of modules 110 may include routines, programs, objects, components, data structures, and so on, which perform particular tasks or implement particular abstract data types.

Further, the database stores information pertaining to inputs fed to the system 100 and/or outputs generated by the system (e.g., data/output generated at each stage of the data processing) 100, specific to the methodology described herein. More specifically, the database stores information being processed at each step of the proposed methodology.

Additionally, the plurality of modules 110 may include programs or coded instructions that supplement applications and functions of the system 100. The repository 112, amongst other things, includes a system database 114 and other data 116. The other data 116 may include data generated as a result of the execution of one or more modules in the plurality of modules 110. Herein, the memory for example the memory 104 and the computer program code configured to, with the hardware processor for example the processor 102, causes the system 100 to perform various functions described herein under.

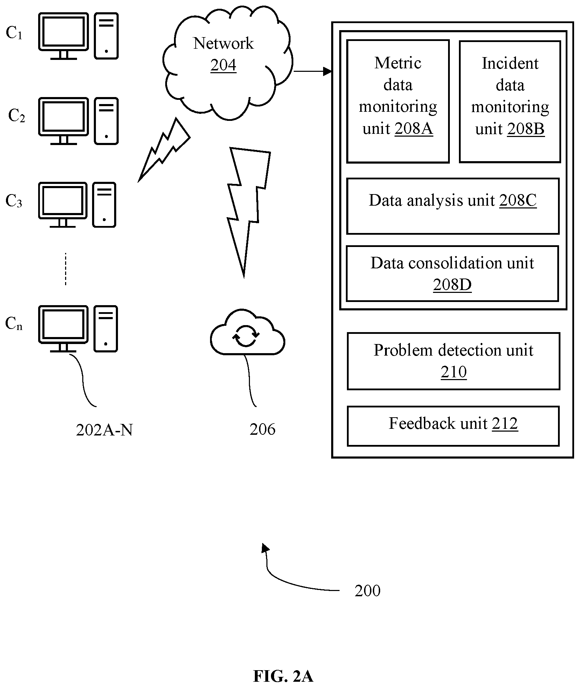

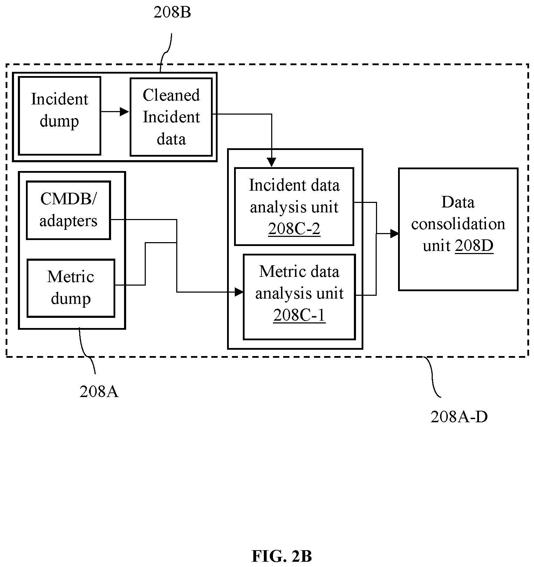

FIG. 2A illustrates an exemplary functional block diagram of the system 100 of FIG. 1, according to some embodiments of the present disclosure. FIG. 2B illustrates an exemplary functional block diagram of a data preprocessing unit 208A through 208D of a problem management system 200 as depicted in FIG. 2A, according to some embodiments of the present disclosure. The problem management system 200 may be an example of the system 100 (FIG. 1). In an embodiment, the problem management system 200 may be embodied in, or is in direct communication with the system, for example the system 100 (FIG. 1). The problem management system 200 provides the learning-based problem management approach in the information technology (IT) operations at the enterprise. The problem management system 200 includes one or more resources 202A through 202N, a network 204, a cloud 206, a data preprocessing unit 208A through 208D, a problem detection unit 210, and a feedback unit 212. The one or more resources 202A through 202N corresponds to i.e., one or more computing devices in the enterprise. For example, the one or more computing devices corresponds to but is not limited to a laptop, a desktop, a workstation, storage devices, a server, an application network devices i.e., a switch, a router. The enterprise corresponds to but is not limited to a company, an industry, and an organization. The data preprocessing unit 208A through 208D is configured to clean and preprocess a plurality of data associated with the one or more resources in the enterprise which is received as an input. The plurality of data associated with the one or more resources includes a metric data, and an incident data. The data preprocessing unit 208A through 208D includes a metric data monitoring unit 208A, an incident data monitoring unit 208B, a data analysis unit 208C, and a data consolidation unit 208D. The metric data monitoring unit 208A is configured to iteratively derive the metric data associated with the one or more resources 202A through 202N. The metric data is the utilization data of the one or more resources 202A through 202N in the enterprise. The metric data includes but is not limited to data associated with a central processing unit (CPU), a memory, a filesystem, a storage, a performance. The incident data monitoring unit 208B is configured to derive the incident data associated with the one or more resources 202A through 202N by deploying an alert data monitoring unit (Not shown in FIGURE). The alert data monitoring unit is configured to monitor the one or more resources 202A through 202N and generates an alert data upon detecting an anomaly associated with characteristics of the one or more resources 202A through 202N. For e.g., an event or incident, 'High CPU utilization' or 'CPU utilization exceeds X%' is generated upon detecting when the CPU of server is highly utilized.

The data analysis unit 208C is configured to derive (a) one or more parameters of metric data, and (b) one or more parameters of the incident data to obtain a first set of analyzed data, and a second set of analyzed data respectively. For example, vitals of the system i.e., CPU utilization, memory utilization or even alerts generated by the system are monitored. The data are passed as an excel/csv file as a ticket dump or captured using a CMDB/adapters to analyze for a predictive investigation.

The data analysis unit 208C includes a metric data analysis unit 208C-1 which is configured to analyze the metric data, by performing a stats time series analysis and an exploratory data analysis (EDA). The metric data is time series data of utilization. For example, the metric data can be the CPU utilization of the server, or a memory utilization of the server. In an embodiment, a usage value is logged for fixed interval of time. For example, the time series data include one or more characteristics from which one or more inferences are drawn. The one or more characteristics associated with the metric data corresponds to but is not limited to: (a) a trend, (b) a seasonality, (c) a changepoint, (d) a headroom, (e) a saturation, (f) a forecast, (g) a health status, and (h) a summary. The summary corresponds to a minimum (MIN), a maximum (MAX), a mean, a median, a standard deviation, a $90^{th}$ percentile.

In an exemplary embodiment, the trend exhibits direction of the time series data. The trend may be uptrend, or down trend, or even constant. The uptrend in memory utilization can point out that the extension of the memory can be needed in the future. Similarly, the downtrend in the CPU utilization may indicate that load is gradually decreasing.

An exemplary pseudo code illustrates the trend can be computed as mentioned below:
findTrend(data):

```
        predictor = find_regression_line(data)
        first_predicted_point = predictor (data [first index])
        last_predicted_point = predictor (data [last index])
        if percentage difference between first_predicted_point and
last_predicted_point is greater than x%:
                return "Increasing Trend"
          else percentage difference between first_predicted_point and
last_predicted_point is lesser than -x%:
```

```
                     return "Decreasing Trend"
          else
                     return "Constant Trend"
```

In an exemplary embodiment, the seasonality associated with the time series data can be defined as a pattern. For example, if CPU utilization is high on every Monday, then the time series have a 'Day of Week' pattern, where on each Monday the CPU utilization tends to be high. The dimension can be anything such as 'Hour of day', 'Day of month', 'Month of year'. In an embodiment, one or more statistical algorithms for forecasting, i.e., Error, Trend, Seasonality Forecast (ETS) or Seasonal Autoregressive Integrated Moving Average (SARIMA). Prediction can be used to take precautionary measures beforehand. For example, a capacity can be expanded to keep one or more services running continuously if the CPU utilization constricts every Monday.

An exemplary pseudo code illustrates the seasonality can be computed as mentioned below:
findSeasonality (data):

```
          for each dimension in day of week, day of month, hour of day etc:
                     if variance of intra-cluster such as in one day in case of day of
     week is low:
                               and if the variance of inter cluster such as subsequent
     days is high:
                     return "Pattern exist"
```

In an exemplary embodiment, detection of the changepoint in the time series data includes an identification of a point in the time series data where a probability distribution changes. The changepoint can also be inferred as an event. For example, post cleanup of a temporary file from the server, releases a memory. Hence, a changepoint in memory utilization, and deletion task is seen as an event.

In an exemplary embodiment, the enterprise can derive statistical inferences from the time series data. For example, the mean utilization, the standard deviation, the changepoint, the 90th percentile. The headroom is utilized to increase a load on metric before runs into a constraint. The headroom shows how much load a resource can accumulate before saturation.

An exemplary pseudo code illustrates the headroom can be computed as mentioned below:
headroomCalculation(data):

```
          average_utilization = find mean of (find mean of each day)
          return max utilization - average utilization
```

In an exemplary embodiment, the saturation point is where the metric runs out of the headroom or tends to reach maximum utilization. The saturation point is an indication of slow processing or latency in response with respect to the CPU.

An exemplary pseudo code illustrates the saturation point can be computed as mentioned below:
Saturation(data):

```
Saturation point = Wherever forecast of metric crosses max utilization
```

In an exemplary embodiment, status of the health can be monitored for each computing resource. For example, a healthy CPU includes a low usage, or a healthy network has low latency. The computing resource is classified mainly in three broad categories i.e., overutilized (risky), a healthy and an underutilized. Many organizations have corresponding own set of rules or methods or techniques to categorize computing resources. One way is when resource is breaching an SLA continuously. For example, if CPU utilization breaches the SLA of 90 percent continuously for three days, then can be considered as the overutilized (i.e., risky) resource. Similarly, when the CPU utilization is below 10 percent, then the computing resource can be classified as the underutilized computing resource.

An exemplary pseudo code illustrates status of the health can be monitored for each computing resource and classification of the computing resource as mentioned below:
findHealthStatus(data):

```
          for each day if data violates the threshold for consecutive x days then:
                     return "Metric is in risk"
          else if data violates the threshold for consecutive y days but less than x
     then:
                     return "Metric is in possible risk"
          else:
                     return "Metric is healthy"
     classifyResources(metric analysis result):
```

```
        if metric is risky and having increasing trend and headroom is less than
x% then:
                return "metric is overutilized"
           else if metric is healthy and having decreasing or constant trend and
headroom is more than x% then:
           return "metric is underutilized"
```

The data analysis unit 208C includes an incident data analysis unit 208C-2 which is configured to analyze the incident data. The incident data, or the incident data, or the alert data is logged which is a time series of events. For example, if CPU is critically high or in overutilized i.e., risky state, then an alert is generated as 'High CPU utilization'. The one or more parameters associated with the incident data corresponds to but is not limited to: (i) an occurrence of an incident, (ii) one or more patterns associated with the incident, (iii) a correlation of the incident, and (iv) a co-occurrence of the incident. The alert data can be unstructured data such as mail or can be a structured data such as some technology logs. The cleaning of the alert data is necessary to achieve a high data integrity. The cleaning of the alert data can be performed by a natural language processing (NLP) technique but is not limited to e.g., a pattern matching, or a catalog matching, or one or more mining techniques.

**TABLE 1**

| Timestamp | Issue | Server |
|-----------|-------|--------|
| T1 | I1 | S1 |
| T2 | I2 | S2 |
| T3 | I1 | S2 |
| T4 | I2 | S1 |
| T5 | I1 | S1 |
| T6 | I2 | S2 |
| T7 | I1 | S1 |

The occurrence count of alert helps in identifying the most frequent alert which further can be used to automate the resolution or even enrich knowledge database (KDB) with one or more resolution steps. Consider the TABLE 1, here occurrence of issue $I_1$ on a server $S_1$ is 3, which can be computed using:

$$\text{Occurrence of issue} = \text{count (issue on a particular server)}$$

The co-occurrence corresponds to the same incident occurring on multiple computing devices. The enterprise is connected with a network, an incident may occur across the servers and the incident can also be called as co-occurred incident. For example, same incident such as 'dll missing' can be seen on multiple same version, same type such as a windows system. Here Issue $I_1$ has occurred on multiple server i.e., server S 1 and server $S_2$, then here $I_1$ has co-occurred on the multiple server.

Alert correlation signature can be generated using one or more historical incident data. A correlation signature includes information associated with one or more alert correlated to alert. For example, the correlation can be computed by:

Confidence of correlation can be calculated using following formula:

$$\text{confidence} = (I_1\_\text{precedes}\_I_2 / I_1\_\text{count}) * (I_2\_\text{follows}\_I_1 / I_2\_\text{count})$$

In an embodiment, a profiling corresponds to identifying a pattern of incidents, duplicate incidents, and count of incidents.

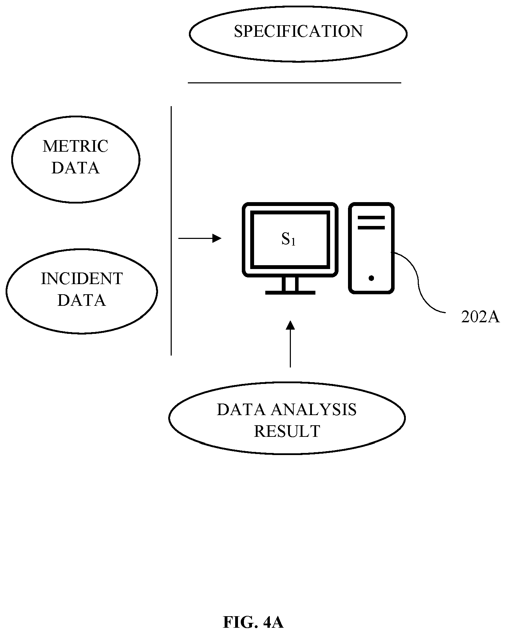

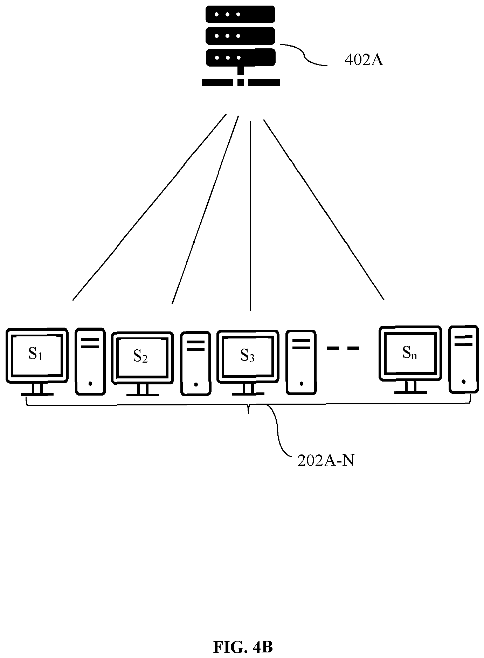

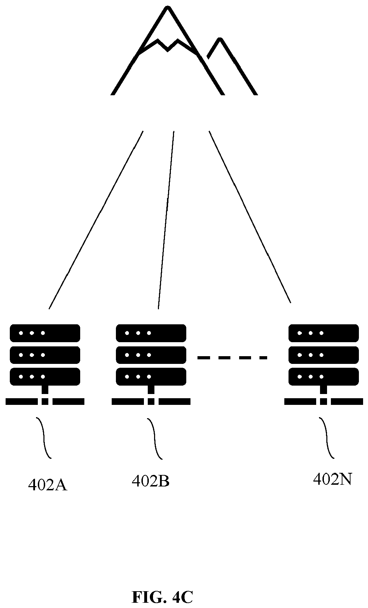

The data consolidation unit 208D is configured to iteratively consolidate or merge the first set of analyzed data, and the second set of analyzed data to obtain a consolidated single input. The consolidated single input includes one or more attributes of the one or more computing devices 202A through 202N with a summarize analysis result. FIG. 4A is an exemplary functional block diagram illustrating the consolidated single input associated with a computing system 202A in an organization, according to some embodiments of the present disclosure. In an exemplary embodiment, the computing system in the organization is represented as a class, and each class includes the one or more attributes. The metric data, or the incident data are considered as an attribute of a class, or even the specification/identifiers of the computing system 202A can be an attribute. A data analysis result is represented as attribute of a class. For example, as depicted in FIG. 4A, a computing system $S_1$ can be represented as a class and the metric data, the incident data, and the data analysis result as the consolidated single input which are the attribute of a class. FIG. 4B is an exemplary functional block diagram illustrating one or more computing systems 202A through 202N in the organization represented as an inherited class of a data center 402A, according to some embodiments of the present disclosure. FIG. 4C is an exemplary functional block diagram illustrating one or more data centers 402A through 402N represented as a part of a geography, according to some embodiments of the present disclosure.

The problem detection unit 210 is configured to iteratively detect one or more problems associated with the one or more resources 202A through 202N in the enterprise by processing the consolidated single input based on a propositional logic. The propositional logic generates one or more rules which are refined with each iteration. In an embodiment, the summary data of the enterprise are visualized. The one or more rules are defined to detect one or more problems associated with the one or more resources 202A through 202N. For example, the one or more rules can be defined to mark all the computing devices with a low headroom or increasing trend in utilization. The problem detection unit 210 includes two types of problem detection i.e., the metric data-based problem detection, and the incident-based problem detection. The metric data-based problem detection corresponds to detection of the problem based on system vitals i.e., CPU utilization, memory utilization. For example, (i) a system with an increasing trend in the CPU utilization, and (ii) a system with a low memory headroom. The incident-based problem detection corresponds to detection of the problem based on the alert data. For example, (i) a system which includes one or more incidents, (ii) a system with high priority alert, and (iii) a system with alert correlating with another system. The problem detection unit 210 is configured to detect one or more problems associated with the one or more resources 202A through 202N in the enterprise based on the consolidated single input, using a propositional logic problem detection. The proposition logic is also referred to as a Boolean logic which works on 0 and 1. One or more symbolic variables are used to represent the logic, and any symbol is used for a representing a proposition, e.g., A, B, C, P, Q, R. The propositional logic includes an object, relations or function, and logical connectives.

The propositions are of two types namely: (i) an atomic proposition, and (ii) a compound proposition. The atomic proposition is a simple propositions including a single proposition symbol. The sentences or propositions which must be either true or false. For example,

$$A = \text{CPU of System A is having headroom} < 10\%.$$

$$B = \text{Memory of System B is having increasing trend.}$$

The compound proposition is constructed by combining simpler or atomic propositions, using parenthesis and logical connectives. For example,

$$A = \text{CPU of System A is having headroom} < 10\% \text{ and increasing trend.}$$

$$B = \text{Memory of System B is having increasing trend and is in risk.}$$

Logical connectives are used to connect two simpler propositions. The logical connectives are but is not limited to: (i) negative, (ii) conjunction, and (iii) disjunction.

The negative logical connective is a sentence such as $\neg$ P which is referred as the negation of P. A literal can be either a positive literal, or a negative literal.

The conjunction logical connective is a sentence which includes $\wedge$ connective such as, P $\wedge$ Q which is referred as the conjunction. For example, CPU is in risk state and includes increasing trend.

P = CPU is in risk state
Q = CPU is having increasing trend.
P $\wedge$ Q

The disjunction logical connective is a sentence which include V connective, such as P $\vee$ Q. which is referred as the disjunction, where P and Q are the propositions. For example, CPU is in risk or is having increasing trend.

P = CPU is in risk state.
Q = CPU is having increasing trend.
PVQ

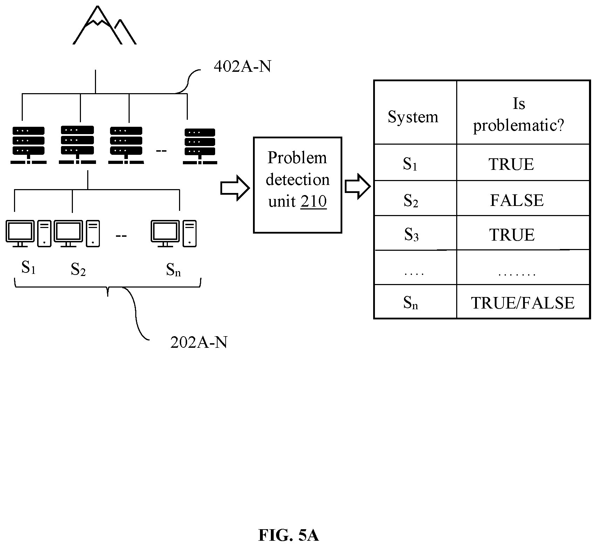

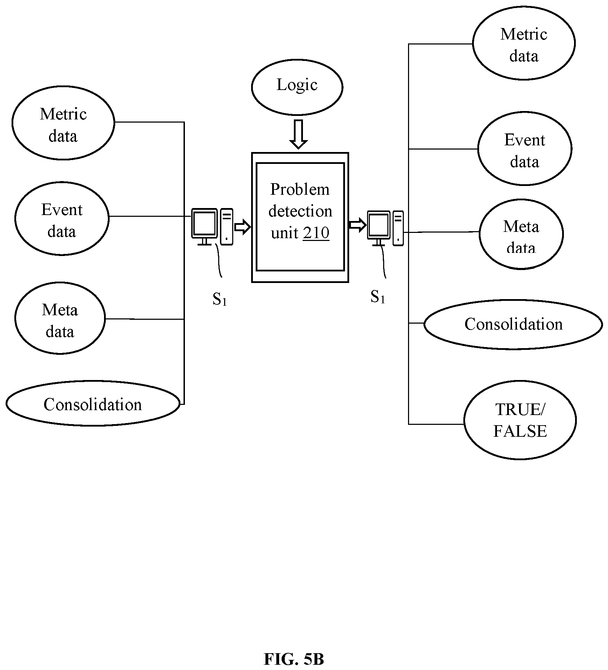

FIG. 5A and FIG. 5B are exemplary functional block diagrams illustrating the one or more computing systems 202A through 202N in a hierarchy to detect the one or more problems based on the preposition logic, according to some embodiments of the present disclosure. In an embodiment, attribute of each computing system in the hierarchy can be passed to the problem detection unit 210 and to detect the problem in whole state and can be stored in a Tabular format. The problem detection algorithm takes attribute of the computing system and the proposition logic in input and generate a result. As depicted in FIG. 5B, considering the computing system $S_1$ includes the attribute such as the metric data, the incident data, meta data, and the consolidation single input. Here the meta data is nothing but the information about the device e.g., a server, then the meta data is a type of the server, operating system installed, environment of the server, CPU, memory. The information is passed along with the proposition logic to the problem detection unit 210 to generate a Boolean flag whether the system is problematic or not. The information and the proposition logic are as follows:

P = CPU of system $S_1$ is in risk.
Q = CPU of system $S_1$ is having increasing trend.

If both the statements are true, then the $S_1$ is a problematic system as per conjunction connectives, and if anyone statement is true, then the system is a problematic as per disjunction connectives. The user can generate an initial tacit knowledge to develop initial state of problem. The tacit knowledge can be generic in nature, which can be fined tuned in each iteration. After each iteration the tacit knowledge obtain more finer and crisper.

The feedback unit 212 is configured to iteratively generate one or more feedback associated with each problem in the one or more resources 202A through 202N in a subsequent iteration. The one or more feedback can be used to suppress one or more unwanted problems. In an embodiment, the feedback unit 212 suppresses unwanted problem request by learning using behavior on accepting and rejecting the problem request and the feedback can be considered as rule. For example, if 'Environment is Test' or 'Resource is Filesystem'. A mining technique is implemented to mine one or more patterns from a discarded problem to reduce the problem request. For example, when a problem is generated by the problem detection algorithm, then the user can give Boolean feedback as True or False on detected problem. If the problem is genuine then the user can mark as True, else then the user can mark as False.

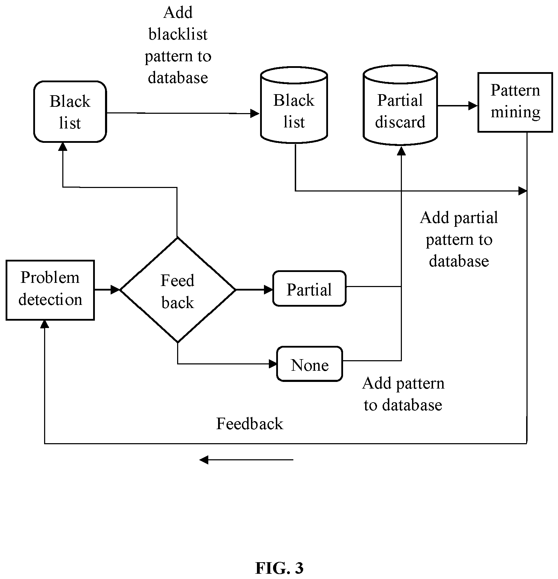

FIG. 3 is an exemplary flow diagram illustrating a method of receiving the feedback upon detection of the one or more problems associated with the one or more resources 202A through 202N in the enterprise, according to some embodiments of the present disclosure. When a problem request is generated, a user can either accept the problem request, or discard the problem request. On discarding the problem request, three types of feedback are provided i.e., (a) a blacklist, (b) a partial feedback, and (c) 'no feedback'. One or more patterns on the feedback provided for each problem associated with the one or more resources 202A through 202N is identified. The one or more patterns on the feedback provided corresponds to but is not limited to: (i) a positive feedback i.e., an accepted feedback, or (ii) a negative feedback i.e., a rejected feedback. The blacklist corresponds to when the user discards any problem with specific reason, e.g., a user does not want problem of a testing environment. The partial feedback corresponds to when the user discards the problem, e.g., a user discard some filesystem-based problem. The 'no feedback' corresponds to when the user discards the problem and does not provide any feedback. The feedback is captured and stored in a database. The blacklist feedback can directly be used in the problem detection in a future iteration. One or more patterns are mined from the partial feedback, and 'no feedback' problem requests.

The pattern which defines what type of problem the user accepts or rejects. In an embodiment, an apriori algorithm is employed to mine one or more patterns. For e.g., if the user partially discards four problem requests, because of file system, and suppose the system is of a test environment. The apriori algorithm is capable to mine one or more properties from the discarded problem such as the user discarding all the file system problem from the test environment which is captured as A = Environment is test, B = Resource is filesystem.

The one or more patterns are mined from all the problem requests passed to the problem detection unit 210 as the feedback. The feedback is used in a first approach i.e., one or more problems are rejected or accepted based on historical feedback. For example, if a problem request on a computing device $S_1$ is rejected in the past based on a specific pattern, then rejection is performed for all new or future problem request with the same pattern is seen on the system $S_1$. The feedback is used in a second approach i.e., a predictive analysis approach in which the mined pattern is used to identify the problem request which matched with the pattern and are accepted or rejected. For example, if the prominent pattern such as A = environment is test, and B = resource is filesystem, is mined, then the pattern is applied to all unseen CI which passed the condition. The user can cluster the problem and provide feedback at once, hence removing an overhead of the problem.

In an embodiment, the one or more patterns are mined from all the discarded problems which is considered as an input for the problem detection unit 210. Whenever such pattern is seen in the input, then such problem is not detected. For example, consider the user include five discarded problem requests as in below mentioned TABLE 2. Here each row represents a computing device and corresponding attribute.

**TABLE 2**

| System ID | Configuration | Criticality | Environment | Health status | Feedback |
|-----------|---------------|-------------|-------------|---------------|----------|
| $S_1$ | 1 core 2GB | Low | Test | Risk | False |
| $S_2$ | 4 core 16GB | Low | Prod | Risk | True |
| $S_3$ | 4 core 16GB | High | Prod | Risk | True |
| $S_4$ | 4 core 16GB | High | Prod | Risk | True |
| $S_5$ | 1 core 16GB | High | Test | Risk | False |

Here problem request $S_1$ and $S_5$ are discarded. The pattern is identified whenever a configuration is 1 core and 16GB and an environment is test in that case the user discards the problem, and the feedback pattern is considered in the problem detection unit 210 and reduce the generation of unwanted problem from a subsequent iteration. In an embodiment, a pattern mining technique is utilized to derive the pattern. The knowledge improves existing tacit knowledge, or even to generate new knowledge. For example, considering five problems are detected and the knowledge which is used to generate a problem is a health status in risk, the knowledge are as follows:

A = Server is in risk
After feedback the step can be concluded or update the knowledge is updated as:
A = Server is in risk and environment should not be a test environment and configuration should be more than 1 core and 16 GB.

Similarly, another knowledge which can be generated is as follows:
B = If Environment is Prod and is in risk
Then, the knowledge is updated after each iteration.
The problem management system 200 learns one or more behavioral patterns and generates with more refined set of problem with each iteration. The one or more patterns are refined after each feedback and used in futuristic problem detection to suppress unwanted problem request.

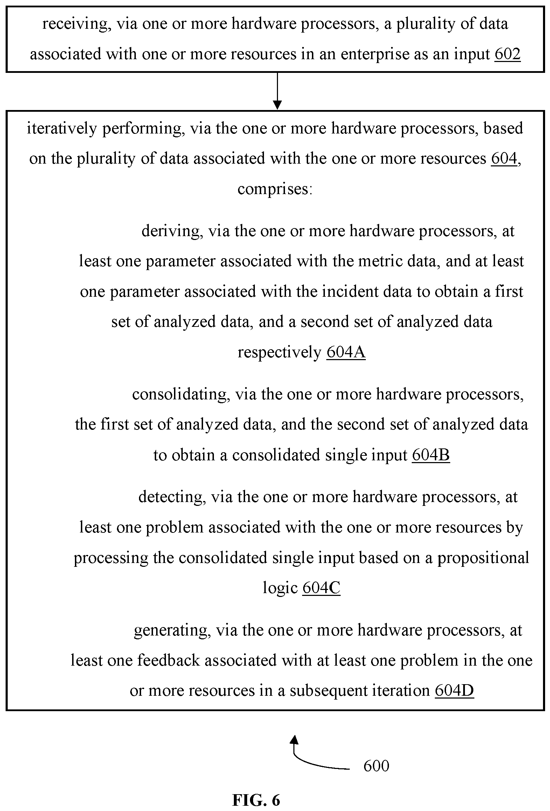

FIG. 6 is an exemplary flow diagram illustrating method 600 of detecting one or more problems associated with the computing system in the organization, according to an embodiment of the present disclosure. In an embodiment, the system 100 comprises one or more data storage devices or the memory 104 operatively coupled to the one or more hardware processors 102 and is configured to store instructions for execution of steps of the method by the one or more processors 102. The flow diagram depicted is better understood by way of following explanation/description. The steps of the method of the present disclosure will now be explained with reference to the components of the system as depicted in FIG. 1 and FIG. 2A.
At step 602, the plurality of data associated with the one or more resources 202A through 202N in the enterprise are received as the input. The plurality of data associated with one or more resources 202A through 202N corresponds to: (i) the metric data, and (ii) the incident data. The one or more resources 202A through 202N corresponds to the one or more computing systems 202A through 202N. The metric data corresponds to the utilization data of one or more resources 202A through 202N in the enterprise. The utilization data of one or more resources 202A through 202N includes the CPU, the memory, the filesystem, the storage, and the performance data. The incident data corresponds to an alert data obtained from the one or more resources 202A through 202N. The alert data includes one or more alerts received upon detecting one or more anomaly in one or more characteristics of the one or more resources 202A through 202N.
At step 604, the plurality of data associated with the one or more resources 202A through 202N is considered to iteratively perform. At step 604A, one or more parameters associated with the metric data, and the one or more parameters associated with the incident data are derived to obtain the first set of analyzed data, and the second set of analyzed data respectively. The one or more parameters associated with the metric data corresponds to at least one of: (i) the trend, (ii) the seasonality, (iii) the changepoint, (iv) the headroom, (v) the saturation, (vi) the forecast, (vii) the health status, (viii) the summary. The summary corresponds to the maximum (MAX), the minimum (MIN), the mean, the median, the standard deviation, the $90^{th}$ percentile. The one or more parameters associated with the incident data corresponds to at least one of: (i) the occurrence of the incident, (ii) one or more patterns associated with the incident, (iii) the correlation of the incident, and (iv) the co-occurrence of the incident.
At step 604B, the first set of analyzed data, and the second set of analyzed data are consolidated to obtain the consolidated single input. The consolidated single input includes the one or more attributes of the one or more resources 202A through 202N with the summarized analysis result.
At step 604C, one or more problems associated with the one or more resources 202A through 202N are detected by processing the consolidated single input based on the propositional logic. The propositional logic generates one or more rules which are refined with each iteration. The one or more rules are defined based on one or more parameters associated with the metric data, and the incident data to detect the one or more problems associated with the one or more resources 202A through 202N. The propositional logic corresponds to a Boolean logic. The propositional logic includes at least one of: (i) an object, (ii) relations or function, and (iii) logical connectives. One or more types of the propositional logic corresponds to: (i) an atomic proposition, or (ii) a compound proposition. One or more types of the logical connectives corresponds to: (i) a negative (ii) a conjunction, and (iii) a disjunction.

At step 604D, one or more feedback associated with the one or more problems in the one or more resources 202A through 202N are generated in a subsequent iteration. The one or more types of the feedback associated with the one or more problems corresponds to: (i) a blacklist, (ii) a partial feedback, and (iii) no feedback. One or more patterns on the feedback provided for each problem associated with the one or more resources 202A through 202N is identified. The one or more patterns on the feedback provided corresponds to at least one of: (i) an accepted feedback, or (ii) a rejected feedback.

**EXPERIMENTAL RESULTS:**

The problem management system 200 benefits IT operations in automatically detecting various hardware capacity and incident class of problems, assigning to a problem manager, creating subtasks, provide context, and recommendations for assistance and help in resolving the problems. The one or more examples of the problems that are possible to identify are: systems at capacity risk, saturating systems, optimization candidates, systems undergoing one or more changes in utilization trend, systems that are having re-occurring issues, similar systems that are facing same issues.

For example, hardware capacity, following are the use cases: a system has been violating corresponding threshold for CPU for last 3 days. Raise a problem request to understand why the system in question is violating the thresholds. A system is 48 core 96 GB RAM machine, only 1/6 of the capacity is being utilized all throughout a year. Investigate the capacity that can be de-provisioned.

The embodiment of the present disclosure herein addresses the unresolved problem of capacity, performance, availability, deployment problems across hardware, software, and network areas of the enterprise IT operations. The embodiment of the present disclosure provides the learning-based problem management for information technology (IT) operations. The embodiment of the present disclosure helps to identify futuristic risks associated with IT systems related to capacity, performance, availability and re-occurring incidents, with the help of algorithm to proactively prevent risk.

The embodiment of the present disclosure is capable to learn the behavioral pattern of the problem detection to find more refined set of problems, allowing users to focus on important problems and not overwhelm them with repetitive problems. The embodiment of the present disclosure helps user to make informed decisions to resolve the problem before occurs by assisting in raising a problem or change request through integration with information technology system management (ITSM). The embodiment of the present disclosure uses AI / ML to detect the problems proactively, distribute the problem by creating sub-tasks after analyzing blueprint for the systems in questions and associated relationships with the other systems, analyze the information to provide automatic observations and recommendations.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (600), comprising:

   receiving (602), via one or more hardware processors, a plurality of data associated with one or more resources (202A through 202N) in an enterprise as an input, wherein the plurality of data associated with the one or more resources (202A through 202N) corresponds to: (i) a metric data, and (ii) an incident data, wherein the one or more resources (202A through 202N) corresponds to one or more computing systems (202A through 202N); and iteratively performing (604), via the one or more hardware processors, based on the plurality of data associated with the one or more resources (202A through 202N), comprises:

   deriving (604A), via the one or more hardware processors, at least one parameter associated with the metric data, and at least one parameter associated with the incident data to obtain a first set of analyzed data, and a second set of analyzed data respectively;
   consolidating (604B), via the one or more hardware processors, the first set of analyzed data, and the second set of analyzed data to obtain a consolidated single input, wherein the consolidated single input comprises one or more attributes of the one or more resources (202A through 202N) with a summarized analysis result;
   detecting (604C), via the one or more hardware processors, at least one problem associated with the one or more resources (202A through 202N) by processing the consolidated single input based on a propositional logic, wherein the propositional logic generate one or more rules which are refined with each iteration, and wherein the one or more rules are defined based on at least one parameter associated with the metric data, and the incident data to detect at least one problem associated with the one or more resources (202A through 202N); and
   generating (604D), via the one or more hardware processors, at least one feedback associated with at least one problem of the one or more resources (202A through 202N) in a subsequent iteration.

2. The processor implemented method (600) as claimed in claim 1, wherein the metric data corresponds to an utilization data of the one or more resources (202A through 202N) in the enterprise, wherein the utilization data of the one or more resources (202A through 202N) comprises a central processing unit (CPU), a memory, a filesystem, a storage, and a performance data, wherein the incident data corresponds to an alert data obtained from the one or more resources (202A through 202N), and wherein the alert data includes one or more alerts received upon detecting at least one anomaly in one or more characteristics of the one or more resources (202A through 202N).

3. The processor implemented method (600) as claimed in claim 1, wherein at least one parameter associated with the metric data corresponds to at least one of: (i) a trend, (ii) a seasonality, (iii) a changepoint, (iv) a headroom, (v) a saturation, (vi) a forecast, (vii) a health status, (viii) a summary, wherein the summary corresponds to a maximum (MAX), a minimum (MIN), a mean, a median, a standard deviation, a $90^{th}$ percentile, and wherein at least one parameter associated with the incident data corresponds to at least one of: (i) an occurrence of an incident, (ii) one or more patterns associated with the incident, (iii) a correlation of the incident, and (iv) a co-occurrence of the incident.

4. The processor implemented method (600) as claimed in claim 1, wherein the propositional logic corresponds to a Boolean logic, wherein the propositional logic comprise at least one of: (i) an object, (ii) relations or function, and (iii) logical connectives, wherein at least one type of the propositional logic corresponds to: (i) an atomic proposition, or (ii) a compound proposition, and wherein at least one type of the logical connectives corresponds to: (i) a negative (ii) a conjunction, and (iii) a disjunction.

5. The processor implemented method (600) as claimed in claim 1, wherein at least one type of the feedback associated with at least one problem corresponds to: (i) a blacklist, (ii) a partial feedback, and (iii) no feedback, wherein at least one pattern on the feedback provided for each problem associated with the one or more resources (202A through 202N) is identified, and wherein at least one pattern on the feedback provided corresponds to at least one of: (i) an accepted feedback, or (ii) a rejected feedback.

6. A system (100), comprising:

a memory (104) storing instructions;
one or more communication interfaces (106); and
one or more hardware processors (102) coupled to the memory (104) via the one or more communication interfaces (106), wherein the one or more hardware processors (102) are configured by the instructions to:

receive a plurality of data associated with one or more resources (202A through 202N) in an enterprise as an input, wherein the plurality of data associated with the one or more resources (202A through 202N) corresponds to: (i) a metric data, and (ii) an incident data, wherein the one or more resources (202A through 202N) corresponds to one or more computing systems (202A through 202N); and
iteratively perform, based on the plurality of data associated with the one or more resources (202A through 202N), comprises:

derive at least one parameter associated with the metric data, and at least one parameter associated with the incident data to obtain a first set of analyzed data, and a second set of analyzed data respectively;
consolidate the first set of analyzed data, and the second set of analyzed data to obtain a consolidated single input, wherein the consolidated single input comprises one or more attributes of the one or more resources (202A through 202N) with a summarized analysis result;
detect at least one problem associated with the one or more resources (202A through 202N) by processing the consolidated single input based on a propositional logic, wherein the propositional logic generate one or more rules which are refined with each iteration, and wherein the one or more rules are defined based on at least one parameter associated with the metric data, and the incident data to detect at least one problem associated with the one or more resources (202A through 202N); and
generate at least one feedback associated with at least one problem of the one or more resources (202A through 202N) in a subsequent iteration.

7. The system (100) as claimed in claim 6, wherein the metric data corresponds to an utilization data of the one or more resources (202A through 202N) in the enterprise, wherein the utilization data of the one or more resources (202A through 202N) comprises a central processing unit (CPU), a memory, a filesystem, a storage, and a performance data, wherein the incident data corresponds to an alert data obtained from the one or more resources (202A through 202N), and wherein the alert data includes one or more alerts received upon detecting at least one anomaly in one or more characteristics of the one or more resources (202A through 202N).

8. The system (100) as claimed in claim 6, wherein at least one parameter associated with the metric data corresponds to at least one of: (i) a trend, (ii) a seasonality, (iii) a changepoint, (iv) a headroom, (v) a saturation, (vi) a forecast, (vii) a health status, (viii) a summary, wherein the summary corresponds to a maximum (MAX), a minimum (MIN), a mean, a median, a standard deviation, a $90^{th}$ percentile, and wherein at least one parameter associated with the incident data corresponds to at least one of: (i) an occurrence of an incident, (ii) one or more patterns associated with the incident, (iii) a correlation of the incident, and (iv) a co-occurrence of the incident.

9. The system (100) as claimed in claim 6, wherein the propositional logic corresponds to a Boolean logic, wherein the propositional logic comprise at least one of: (i) an object, (ii) relations or function, and (iii) logical connectives, wherein at least one type of the propositional logic corresponds to: (i) an atomic proposition, or (ii) a compound proposition, and wherein at least one type of the logical connectives corresponds to: (i) a negative (ii) a conjunction, and (iii) a disjunction.

10. The system (100) as claimed in claim 6, wherein at least one type of the feedback associated with at least one problem corresponds to: (i) a blacklist, (ii) a partial feedback, and (iii) no feedback, wherein at least one pattern on the feedback provided for each problem associated with the one or more resources (202A through 202N) is identified, and wherein at least one pattern on the feedback provided corresponds to at least one of: (i) an accepted feedback, or (ii) a rejected feedback.

11. One or more non-transitory machine-readable information storage mediums comprising one or more instructions which when executed by one or more hardware processors cause:

receiving a plurality of data associated with one or more resources (202A through 202N) in an enterprise as an input, wherein the plurality of data associated with the one or more resources (202A through 202N) corresponds to: (i) a metric data, and (ii) an incident data, wherein the one or more resources (202A through 202N) corresponds to one or more computing systems (202A through 202N); and
iteratively performing, based on the plurality of data associated with the one or more resources (202A through 202N), comprises:

deriving at least one parameter associated with the metric data, and at least one parameter associated with the incident data to obtain a first set of analyzed data, and a second set of analyzed data respectively;
consolidating the first set of analyzed data, and the second set of analyzed data to obtain a consolidated single input, wherein the consolidated single input comprises one or more attributes of the one or more resources (202A through 202N) with a summarized analysis result;
detecting at least one problem associated with the one or more resources (202A through 202N) by processing the consolidated single input based on a propositional logic, wherein the propositional logic generate one or more rules which are refined with each iteration, and wherein the one or more rules are defined based on at least one parameter associated with the metric data, and the incident data to detect at least one problem associated with the one or more resources (202A through 202N); and
generating at least one feedback associated with at least one problem of the one or more resources (202A through 202N) in a subsequent iteration.

12. The one or more non-transitory machine-readable information storage mediums as claimed in claim 11, wherein the metric data corresponds to an utilization data of the one or more resources (202A through 202N) in the enterprise, wherein the utilization data of the one or more resources (202A through 202N) comprises a central processing unit (CPU), a memory, a filesystem, a storage, and a performance data, wherein the incident data corresponds to an alert data obtained from the one or more resources (202A through 202N), and wherein the alert data includes one or more alerts received upon detecting at least one anomaly in one or more characteristics of the one or more resources (202A through 202N).

13. The one or more non-transitory machine-readable information storage mediums as claimed in claim 11, wherein at least one parameter associated with the metric data corresponds to at least one of: (i) a trend, (ii) a seasonality, (iii) a changepoint, (iv) a headroom, (v) a saturation, (vi) a forecast, (vii) a health status, (viii) a summary, wherein the summary corresponds to a maximum (MAX), a minimum (MIN), a mean, a median, a standard deviation, a $90^{th}$ percentile, and wherein at least one parameter associated with the incident data corresponds to at least one of: (i) an occurrence of an incident, (ii) one or more patterns associated with the incident, (iii) a correlation of the incident, and (iv) a co-occurrence of the incident.

14. The one or more non-transitory machine-readable information storage mediums as claimed in claim 11, wherein the propositional logic corresponds to a Boolean logic, wherein the propositional logic comprise at least one of: (i) an object, (ii) relations or function, and (iii) logical connectives, wherein at least one type of the propositional logic corresponds to: (i) an atomic proposition, or (ii) a compound proposition, and wherein at least one type of the logical connectives corresponds to: (i) a negative (ii) a conjunction, and (iii) a disjunction.

15. The one or more non-transitory machine-readable information storage mediums as claimed in claim 11, wherein at least one type of the feedback associated with at least one problem corresponds to: (i) a blacklist, (ii) a partial feedback, and (iii) no feedback, wherein at least one pattern on the feedback provided for each problem associated with the one or more resources (202A through 202N) is identified, and wherein at least one pattern on the feedback provided corresponds to at least one of: (i) an accepted feedback, or (ii) a rejected feedback.

**Amended claims in accordance with Rule 137(2) EPC.**

1. A processor implemented method (600), comprising:

receiving (602), via one or more hardware processors, a plurality of data associated with one or more resources (202A through 202N) in an enterprise as an input, wherein the plurality of data associated with the one or more resources (202A through 202N) corresponds to: (i) a metric data, and (ii) an incident data, wherein the one or more resources (202A through 202N) corresponds to one or more computing systems (202A through 202N); and iteratively performing (604), via the one or more hardware processors, based on the plurality of data associated with the one or more resources (202A through 202N), comprises:

deriving (604A), via the one or more hardware processors, at least one parameter associated with the metric data, and at least one parameter associated with the incident data to obtain a first set of analyzed data, and a second set of analyzed data respectively;

consolidating (604B), via the one or more hardware processors, the first set of analyzed data, and the second set of analyzed data to obtain a consolidated single input, wherein the consolidated single input comprises one or more attributes of the one or more resources (202A through 202N) with a summarized analysis result;

detecting (604C), via the one or more hardware processors, at least one problem associated with the one or more resources (202A through 202N) by processing the consolidated single input based on a propositional logic, wherein the propositional logic generate one or more rules which are refined with each iteration, wherein the one or more rules are defined based on at least one parameter associated with the metric data, and the incident data to detect at least one problem associated with the one or more resources (202A through 202N), and wherein when the at least one problem is detected, the at least one problem is either accepted or discarded;

generating (604D), via the one or more hardware processors, at least one feedback associated with at least one problem of the one or more resources (202A through 202N) in a subsequent iteration, upon discarding the at least one problem, wherein the at least one feedback is used to suppress one or more unwanted problem requests by learning behavior on accepting and rejecting a problem request and the feedback is considered as a rule; and

identifying, via the one or more hardware processors, at least one pattern on the at least one feedback provided for each discarded problem associated with the one or more resources 202A through 202N by mining one or more properties from the discarded problem using an apriori algorithm, wherein the at least one pattern defines a type of problem a user accepts or rejects, wherein the identified at least one pattern is considered as an input for the problem detection and when the identified at least one pattern is present in the input, then the corresponding problem is not detected, and wherein one or more patterns are refined after each feedback and used in futuristic problem detection to suppress unwanted problem request.

2. The processor implemented method (600) as claimed in claim 1, wherein the metric data corresponds to an utilization data of the one or more resources (202A through 202N) in the enterprise, wherein the utilization data of the one or more resources (202A through 202N) comprises a central processing unit (CPU), a memory, a filesystem, a storage, and a performance data, wherein the incident data corresponds to an alert data obtained from the one or more resources (202A through 202N), and wherein the alert data includes one or more alerts received upon detecting at least one anomaly in one or more characteristics of the one or more resources (202A through 202N).

3. The processor implemented method (600) as claimed in claim 1, wherein at least one parameter associated with the metric data corresponds to at least one of: (i) a trend, (ii) a seasonality, (iii) a changepoint, (iv) a headroom, (v) a saturation, (vi) a forecast, (vii) a health status, (viii) a summary, wherein the summary corresponds to a maximum (MAX), a minimum (MIN), a mean, a median, a standard deviation, a 90th percentile, and wherein at least one parameter associated with the incident data corresponds to at least one of: (i) an occurrence of an incident, (ii) one or more patterns associated with the incident, (iii) a correlation of the incident, and (iv) a co-occurrence of the incident.

4. The processor implemented method (600) as claimed in claim 1, wherein the propositional logic corresponds to a Boolean logic, wherein the propositional logic comprise at least one of: (i) an object, (ii) relations or function, and (iii) logical connectives, wherein at least one type of the propositional logic corresponds to: (i) an atomic proposition, or (ii) a compound proposition, and wherein at least one type of the logical connectives corresponds to: (i) a negative (ii) a conjunction, and (iii) a disjunction.

5. The processor implemented method (600) as claimed in claim 1, wherein at least one type of the feedback associated with at least one problem corresponds to: (i) a blacklist, (ii) a partial feedback, and (iii) no feedback, wherein the blacklist corresponds to when the user discards the problem with a reason, wherein the blacklist is directly used in the problem detection in a future iteration, wherein partial feedback corresponds to when the user discards the problem, and wherein the no feedback corresponds to when the user discards the problem and not providing the feedback.

6. A system (100), comprising:

   a memory (104) storing instructions;
   one or more communication interfaces (106); and
   one or more hardware processors (102) coupled to the memory (104) via the one or more communication interfaces (106), wherein the one or more hardware processors (102) are configured by the instructions to:

   receive a plurality of data associated with one or more resources (202A through 202N) in an enterprise as an input, wherein the plurality of data associated with the one or more resources (202A through 202N) corresponds to: (i) a metric data, and (ii) an incident data, wherein the one or more resources (202A through 202N) corresponds to one or more computing systems (202A through 202N); and
   iteratively perform, based on the plurality of data associated with the one or more resources (202A through 202N), comprises:

   derive at least one parameter associated with the metric data, and at least one parameter associated with the incident data to obtain a first set of analyzed data, and a second set of analyzed data respectively;
   consolidate the first set of analyzed data, and the second set of analyzed data to obtain a consolidated single input, wherein the consolidated single input comprises one or more attributes of the one or more resources (202A through 202N) with a summarized analysis result;
   detect at least one problem associated with the one or more resources (202A through 202N) by processing the consolidated single input based on a propositional logic, wherein the propositional logic generate one or more rules which are refined with each iteration, wherein the one or more rules are defined based on at least one parameter associated with the metric data, and the incident data to detect at least one problem associated with the one or more resources (202A through 202N), and wherein when the at least one problem is detected, the at least one problem is either accepted or discarded;
   generate at least one feedback associated with at least one problem of the one or more resources (202A through 202N) in a subsequent iteration, upon discarding the at least one problem, wherein the at least one feedback is used to suppress one or more unwanted problem requests by learning behavior on accepting and rejecting a problem request and the feedback is considered as a rule; and
   identify at least one pattern on the at least one feedback provided for each discarded problem associated with the one or more resources 202A through 202N by mining one or more properties from the discarded problem using an apriori algorithm, wherein the at least one pattern defines a type of problem a user accepts or rejects, wherein the identified at least one pattern is considered as an input for the problem detection and when the identified at least one pattern is present in the input, then the corresponding problem is not detected, and wherein one or more patterns are refined after each feedback and used in futuristic problem detection to suppress unwanted problem request.

7. The system (100) as claimed in claim 6, wherein the metric data corresponds to an utilization data of the one or more resources (202A through 202N) in the enterprise, wherein the utilization data of the one or more resources (202A through 202N) comprises a central processing unit (CPU), a memory, a filesystem, a storage, and a performance data, wherein the incident data corresponds to an alert data obtained from the one or more resources (202A through 202N), and wherein the alert data includes one or more alerts received upon detecting at least one anomaly in one or more characteristics of the one or more resources (202A through 202N).

8. The system (100) as claimed in claim 6, wherein at least one parameter associated with the metric data corresponds to at least one of: (i) a trend, (ii) a seasonality, (iii) a changepoint, (iv) a headroom, (v) a saturation, (vi) a forecast, (vii) a health status, (viii) a summary, wherein the summary corresponds to a maximum (MAX), a minimum (MIN), a mean, a median, a standard deviation, a 90$^{th}$ percentile, and wherein at least one parameter associated with the incident data corresponds to at least one of: (i) an occurrence of an incident, (ii) one or more patterns associated with the incident, (iii) a correlation of the incident, and (iv) a co-occurrence of the incident.

9. The system (100) as claimed in claim 6, wherein the propositional logic corresponds to a Boolean logic, wherein the propositional logic comprise at least one of: (i) an object, (ii) relations or function, and (iii) logical connectives, wherein at least one type of the propositional logic corresponds to: (i) an atomic proposition, or (ii) a compound proposition, and wherein at least one type of the logical connectives corresponds to: (i) a negative (ii) a conjunction, and (iii) a disjunction.

10. The system (100) as claimed in claim 6, wherein at least one type of the feedback associated with at least one problem corresponds to: (i) a blacklist, (ii) a partial feedback, and (iii) no feedback, wherein the blacklist corresponds to when the user discards the problem with a reason, wherein the blacklist is directly used in the problem detection in a future iteration, wherein partial feedback corresponds to when the user discards the problem, and wherein the no feedback corresponds to when the user discards the problem and not providing the feedback.

11. One or more non-transitory machine-readable information storage mediums comprising one or more instructions which when executed by one or more hardware processors cause:

   receiving a plurality of data associated with one or more resources (202A through 202N) in an enterprise as an input, wherein the plurality of data associated with the one or more resources (202A through 202N) corresponds to: (i) a metric data, and (ii) an incident data, wherein the one or more resources (202A through 202N) corresponds to one or more computing systems (202A through 202N); and
   iteratively performing, based on the plurality of data associated with the one or more resources (202A through 202N), comprises:

   deriving at least one parameter associated with the metric data, and at least one parameter associated with the incident data to obtain a first set of analyzed data, and a second set of analyzed data respectively;
   consolidating the first set of analyzed data, and the second set of analyzed data to obtain a consolidated single input, wherein the consolidated single input comprises one or more attributes of the one or more resources (202A through 202N) with a summarized analysis result;
   detecting at least one problem associated with the one or more resources (202A through 202N) by processing the consolidated single input based on a propositional logic, wherein the propositional logic generate one or more rules which are refined with each iteration, wherein the one or more rules are defined based on at least one parameter associated with the metric data, and the incident data to detect at least one problem associated with the one or more resources (202A through 202N), and wherein when the at least one problem is detected, the at least one problem is either accepted or discarded;
   generating at least one feedback associated with at least one problem of the one or more resources (202A through 202N) in a subsequent iteration, upon discarding the at least one problem, wherein the at least one feedback is used to suppress one or more unwanted problem requests by learning behavior on accepting and rejecting a problem request and the feedback is considered as a rule; and
   identifying at least one pattern on the at least one feedback provided for each discarded problem associated with the one or more resources 202A through 202N by mining one or more properties from the discarded problem using an apriori algorithm, wherein the at least one pattern defines a type of problem a user accepts or rejects, wherein the identified at least one pattern is considered as an input for the problem detection and when the identified at least one pattern is present in the input, then the corresponding problem is not detected, and wherein one or more patterns are refined after each feedback and used in futuristic problem detection to suppress unwanted problem request.

12. The one or more non-transitory machine-readable information storage mediums as claimed in claim 11, wherein the metric data corresponds to an utilization data of the one or more resources (202A through 202N) in the enterprise, wherein the utilization data of the one or more resources (202A through 202N) comprises a central processing unit (CPU), a memory, a filesystem, a storage, and a performance data, wherein the incident data corresponds to an alert data obtained from the one or more resources (202A through 202N), and wherein the alert data includes one or more alerts received upon detecting at least one anomaly in one or more characteristics of the one or more resources (202A through 202N).

13. The one or more non-transitory machine-readable information storage mediums as claimed in claim 11, wherein at least one parameter associated with the metric data corresponds to at least one of: (i) a trend, (ii) a seasonality, (iii) a changepoint, (iv) a headroom, (v) a saturation, (vi) a forecast, (vii) a health status, (viii) a summary, wherein the summary corresponds to a maximum (MAX), a minimum (MIN), a mean, a median, a standard deviation, a 90th percentile, and wherein at least one parameter associated with the incident data corresponds to at least one of: (i) an occurrence of an incident, (ii) one or more patterns associated with the incident, (iii) a correlation of the incident, and (iv) a co-occurrence of the incident.

14. The one or more non-transitory machine-readable information storage mediums as claimed in claim 11, wherein the propositional logic corresponds to a Boolean logic, wherein the propositional logic comprise at least one of: (i) an object, (ii) relations or function, and (iii) logical connectives, wherein at least one type of the propositional logic corresponds to: (i) an atomic proposition, or (ii) a compound proposition, and wherein at least one type of the logical connectives corresponds to: (i) a negative (ii) a conjunction, and (iii) a disjunction.

15. The one or more non-transitory machine-readable information storage mediums as claimed in claim 11, wherein at least one type of the feedback associated with at least one problem corresponds to: (i) a blacklist, (ii) a partial feedback, and (iii) no feedback, wherein the blacklist corresponds to when the user discards the problem with a reason, wherein the blacklist is directly used in the problem detection in a future iteration, wherein partial feedback corresponds to when the user discards the problem, and wherein the no feedback corresponds to when the user discards the problem and not providing the feedback.

**FIG. 1**

C₁

C₂

C₃

Cₙ

202A-N

Network
204

206

Metric
data
monitoring
unit 208A

Incident
data
monitoring
unit 208B

Data analysis unit 208C

Data consolidation unit
208D

Problem detection unit
210

Feedback unit 212

200

**FIG. 2A**

208B

**FIG. 2B**

**FIG. 3**

**FIG. 4A**

402A

S₁  S₂  S₃ - - Sₙ

202A-N

**FIG. 4B**

**FIG. 4C**

402A   402B   402N

| System | Is problematic? |
|--------|-----------------|
| $S_1$ | TRUE |
| $S_2$ | FALSE |
| $S_3$ | TRUE |
| .... | ....... |
| $S_n$ | TRUE/FALSE |

402A-N

Problem detection unit 210

202A-N

$S_1$   $S_2$   $S_n$

**FIG. 5A**

**FIG. 5B**

receiving, via one or more hardware processors, a plurality of data associated with one or more resources in an enterprise as an input 602

iteratively performing, via the one or more hardware processors, based on the plurality of data associated with the one or more resources 604, comprises:

deriving, via the one or more hardware processors, at least one parameter associated with the metric data, and at least one parameter associated with the incident data to obtain a first set of analyzed data, and a second set of analyzed data respectively 604A

consolidating, via the one or more hardware processors, the first set of analyzed data, and the second set of analyzed data to obtain a consolidated single input 604B

detecting, via the one or more hardware processors, at least one problem associated with the one or more resources by processing the consolidated single input based on a propositional logic 604C

generating, via the one or more hardware processors, at least one feedback associated with at least one problem in the one or more resources in a subsequent iteration 604D

600

**FIG. 6**

Europäisches
Patentamt

European
Patent Office

Office européen
des brevets

# EUROPEAN SEARCH REPORT

**Application Number**

EP 24 18 4691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 128 425 A1 (TATA CONSULTANCY SERVICES LTD [IN]) 8 February 2017 (2017-02-08) | 1-4,6-9, 11-14 | INV. G06F11/07 |
| Y | * abstract *<br>* paragraphs [0030] - [0036], [0045] *<br>* figure 3 *<br>----- | 5,10,15 | |
| Y | US 2015/180700 A1 (JAIN ROHIT [IN] ET AL) 25 June 2015 (2015-06-25)<br>* abstract *<br>* paragraphs [0009], [0039] - [0043] *<br>----- | 5,10,15 | |

**TECHNICAL FIELDS SEARCHED (IPC)**

G06F

The present search report has been drawn up for all claims

| Place of search | Date of completion of the search | Examiner |
|---|---|---|
| Munich | 19 November 2024 | Leuridan, Koen |

EPO FORM 1503 03.82 (P04C01)

**ANNEX TO THE EUROPEAN SEARCH REPORT
ON EUROPEAN PATENT APPLICATION NO.**

EP 24 18 4691

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2024

| Patent document cited in search report | | Publication date | Patent family member(s) | | Publication date |
|---|---|---|---|---|---|
| EP 3128425 | A1 | 08-02-2017 | AU | 2016210785 A1 | 23-02-2017 |
| | | | CA | 2938472 A1 | 07-02-2017 |
| | | | EP | 3128425 A1 | 08-02-2017 |
| | | | JP | 6531079 B2 | 12-06-2019 |
| | | | JP | 2017037645 A | 16-02-2017 |
| | | | US | 2017039530 A1 | 09-02-2017 |
| US 2015180700 | A1 | 25-06-2015 | US | 2014195670 A1 | 10-07-2014 |
| | | | US | 2015180700 A1 | 25-06-2015 |
| | | | US | 2016072662 A1 | 10-03-2016 |

EPO FORM P0459

For more details about this annex : see Official Journal of the European Patent Office, No. 12/82

**EP 4 582 953 A1**

**Patent documents cited in the description**

- IN 202421001100